(19) **Europäisches Patentamt**

**European Patent Office**

**Office européen des brevets**

(11) **EP 1 450 302 A1**

(12) **EUROPEAN PATENT APPLICATION**
published in accordance with Art. 158(3) EPC

(43) Date of publication:
**25.08.2004 Bulletin 2004/35**

(51) Int Cl.[7]: **G06T 1/00**, H04N 1/46,
H04N 1/60, H04N 9/64,
G09G 5/02, G09G 5/04

(21) Application number: **02802372.9**

(22) Date of filing: **24.10.2002**

(86) International application number:
**PCT/JP2002/011030**

(87) International publication number:
**WO 2003/038751 (08.05.2003 Gazette 2003/19)**

(84) Designated Contracting States:
**AT BE BG CH CY CZ DE DK EE ES FI FR GB GR
IE IT LI LU MC NL PT SE SK TR**

(30) Priority: **02.11.2001 JP 2001338122**

(71) Applicants:
• **Telecommunications Advancement
Organization of Japan
Tokyo 105-0014 (JP)**
• **Olympus Corporation
Tokyo 151-0072 (JP)**

(72) Inventors:
• **OHSAWA, Kenro,
c/o Telecom. Advance. Org. of Japan
Tokyo 105-0014 (JP)**
• **YAMAGUCHI, Masahiro,
c/o Telecom Adv. Org of Japan
Tokyo 105-0014 (JP)**
• **OHYAMA, Nagaaki,
c/o Telecom. Adv. Org. of Japan
Tokyo 105-0014 (JP)**

(74) Representative: **von Hellfeld, Axel, Dr. Dipl.-Phys.
Wuesthoff & Wuesthoff
Patent- und Rechtsanwälte
Schweigerstrasse 2
81541 München (DE)**

(54) **COLOR REPRODUCTION SYSTEM**

(57) In a color reproduction system, under constraint conditions where colorimetric values of a subject spectrum, calculated by a colorimetric-value calculation unit (21), match colorimetric values of a display spectrum of a six-primary-color display (3), a signal calculation unit (22) calculates display signals such that squared errors between the subject spectrum and the display spectrum are minimized within the gamut of the remaining degree of freedom by using Lagrange's method of undetermined coefficients or the reduced gradient method.

**FIG.5**

2 : IMAGE CONVERTER

MULTIBAND CAMERA (1) → SPECTRUM ESTIMATION UNIT (11) → DISPLAY COLOR CONVERSION UNIT (12) → SIX-PRIMARY-COLOR DISPLAY (3)

DATA STORAGE UNIT (13)

EP 1 450 302 A1

**Description**

Technical Field

The present invention relates to a color reproduction system, and more particularly, to a color reproduction system for displaying an image of which spectrum is approximated.

Background Art

Conventional most color image apparatuses receive or display colors based on the three primary colors on the basis of the fact that the human color perception characteristics are three dimensional. The color image apparatuses include a camera as an example. The camera receives a spectrum of a subject using three sensors having different spectral sensitivities and expresses color information on the basis of output signals of the respective sensors. The color image apparatuses include a display such as a CRT display as another example. The display shows various colors by additively mixing three different colors of an emission spectrum and expresses color information on the basis of input signals.

In recent years, in the field of application for telemedicine and electronic art galleries in which it is important to faithfully reproduce a color of a subject, researches into a system for obtaining faithful color information using a multiband camera are being done actively.

For example, one of the researches is disclosed in "SEIKAKUNA IRO SAIGEN GA KANOUNA KARAH GAZOU SISUTEMU NO KAIHATSU (Development of Color Image System Capable of Faithfully Reproducing Colors)", Yuri Murakami et al., Proceedings of COLOR FORUM JAPAN '99, pp. 5-8 (document 1). According to this research, when the number of bands of an input device is increased, the accuracy of color information of a subject to be obtained can be increased.

On the other hand, for displays, researches into a multiprimary projection display capable of displaying vivid colors, which cannot be expressed by the conventional three primary colors, are conducted. For example, as disclosed in "Six-Primary Color Projection Display for Expanded Color Gamut Reproduction", T. Ajito et al., Proc. Int. Symp. on Multispectral Imaging and Color Reproduction for Digital Archives, Chiba University, Japan, 1999, pp. 135-138 (document 2), six-primary-color display is performed to expand the color gamut which can be displayed. Thus, the color gamut of a six-primary-color display is larger than that of the conventional three-primary-color display.

As mentioned above, as alternatives to the conventional input/output systems with RGB three-band inputs and three-primary-color display, input/output systems with multiband inputs and multiprimary-color display are being proposed.

In those systems, to faithfully reproduce colors, it is necessary to convert color information through colorimetric values independent of devices (device-independent colors) in the same way as the conventional three-primary-color system. In other words, it is necessary to accurately convert shooting signal values captured by a multiband camera into device-independent colors and then accurately convert the device-independent colors into multiprimary-color signals to be displayed on a multiprimary-color display.

Color models generally used as the device-independent colors include the CIE 1931 color model (XYZ color model) standardized by Commission Internationale de l'Eclairage (CIE) and the CIELAB color model constituting a uniform color space based on the XYZ color model.

The XYZ color model quantitatively expresses a color using XYZ values obtained by a color matching function derived on the basis of color matching experiments. The color matching function is obtained from mean characteristic of data derived from color matching experiment done to many trial subjects. The color matching function is given to the characteristics of a virtual observer called the CIE 1931 Standard Colorimetric Observer (hereinbelow, referred to as the standard observer).

Actually, there are, however, differences between individuals in color matching functions. Particularly, it is known that the individual color matching function is remarkably deviated, with age grown, from that of the standard observer. The deviation from the standard observer is disclosed in, for example, "Special metamerism index: Change in observer", CIE Technical Report, No. 80, 1989 (document 3). This report includes functions representing differences.

The conventional display systems including the above-mentioned input/output systems with multiband inputs and multiprimary-color display are designed to perform faithful color reproduction in consideration of only the standard observer. According to the conventional systems, therefore, faithful color reproduction is not necessarily performed for a person with visual performance different from that of the standard observer or a color model which is different from that of the standard observer.

On the contrary, means for performing color reproduction in consideration of variations in color matching functions using statistical data of the color matching functions is disclosed in "Aspects of Total Multispectral Image Reproduction Systems", B. Hill, Proceedings of Second International Symposium on Multispectral Imaging and High Accurate Color Reproduction, pp. 67-78 (document 4).

In using the means disclosed in the above document 4, it is necessary to measure many color matching functions which vary depending on the differences between individuals to obtain statistical data of the color matching functions. However, it is difficult to accurately measure many color matching functions. Reliable statistical data about the color matching functions are not enough at present. Under the present circumstances, therefore, it is difficult to put color reproduction using statistic data of the color matching functions into practical use.

The present invention is made in consideration of the above situation and it is an object of the present invention to provide a color reproduction system capable of performing faithful color reproduction for many observers having variations in color matching functions.

Disclosure of Invention

According to a first invention, there is provided a color reproduction system including: color conversion means for converting spectral data into display signals; and color image display means for performing display on the basis of the display signals, wherein the color conversion means converts spectral data into display signals such that a display spectrum relating to display by the color image display means is approximated to the spectral data in the gamut of the display spectrum which can be realized by the color image display means.

According to a second invention, in the color reproduction system according to the first invention, the color conversion means performs the approximation under condition that colorimetric values of the spectral data match colorimetric values of the display spectrum and then converts the spectral data into the display signals.

Further, according to a third invention, in the color reproduction system according to the second invention, the colorimetric values are calculated in correspondence with each of arbitrary number of functions.

According to a fourth invention, in the color reproduction system according to the first to third inventions, the color conversion means approximates the spectral data weighted by a desired function to the display spectrum weighted by the desired function.

According to a fifth invention, in the color reproduction system according to the first to fourth inventions, the color conversion means performs the approximation using least-squares approximation between the spectral data and the display spectrum.

According to a sixth invention, in the color reproduction system according to the first to fifth inventions, the color conversion means performs the approximation using least-squares approximation whereby a display spectrum based on the display signals lies within the gamut of the color image display means.

Brief Description of the Drawings

Fig. 1 is a schematic diagram showing the structure of a color reproduction system according to an embodiment of the present invention.
Fig. 2 is a diagram showing the structure of a multiband camera according to the present embodiment.
Fig. 3 is a diagram showing an example of the spectral sensitivity of a multiband camera according to the present embodiment, the multiband including 16 bands.
Fig. 4 is a diagram showing an emission spectrum comprising six primary colors of a six-primary-color display according to the present embodiment.
Fig. 5 is a block diagram showing the structure of an image converter according to the present embodiment.
Fig. 6 is a block diagram showing the structure of a display color conversion unit according to the present embodiment.
Fig. 7 is a block diagram showing the structure of a signal calculation unit according to the present embodiment.

Best Mode for Carrying Out the Invention

Prior to the brief description of an embodiment of the present invention, a principle used in the present invention will now be described.

In representation using multiprimary colors (N primary colors: $N \geq 4$) more than three primary colors, even when representation is performed so as to allow a specific observer (for example, the standard observer) to recognize the same color as an original color, in other words, even when the human three-dimensional color perception conditions are used as constraint conditions, (N-3) degree of freedom remains.

According to the present principle, the remaining degree of freedom is used under the constraint conditions that colorimetric values match, and further, spectral approximation is performed, so that fine color reproduction for non-specific observers is realized. The principle will now be described.

A spectrum at a certain pixel position in an image of a subject to be reproduced is set to $S(\lambda)$. A color corresponding to the spectrum $S(\lambda)$ is reproduced using an N-primary-color display having N primary colors. The N-primary-color display reproduces a color using additive color mixture of the N primary colors.

In other words, a display spectrum $S_d(\lambda)$ of the N-primary-color display is expressed using an emission spectrum $S_i(\lambda)$ (i = 1 to N) of each primary color.

**[Expression 1]**

$$S_d(\lambda) = \sum_{i=1}^{N} \alpha_i S_i(\lambda)$$

Where, $\alpha_i$ denotes a display signal value of a primary color i and is in the range given by the following expression 2.

[Expression 2]

$$0 \leq \alpha_i \leq 1 \qquad (i=1 \sim N)$$

The constraint conditions for equalizing the XYZ tristimulus values of $S(\lambda)$ to those of $S_d(\lambda)$ are expressed as the following expression 3.

[Expression 3]

$$X=X_d, Y=Y_d, Z=Z_d$$

Where, the respective left sides are expressed as follows.

[Expression 4]

$$X=\int x(\lambda)S(\lambda)d\lambda, Y=\int y(\lambda)S(\lambda)d\lambda, Z=\int z(\lambda)S(\lambda)d\lambda$$

Using the above expression 1, the respective right sides are expressed as follows.

**[Expression 5]**

$$X_d = \int x(\lambda)S_d(\lambda)d\lambda = \int x(\lambda)\sum_{i=1}^{N} \alpha_i S_i(\lambda)d\lambda$$

$$= \sum_{i=1}^{N} \alpha_i \int x(\lambda)S_i(\lambda)d\lambda = \sum_{i=1}^{N} \alpha_i X_i$$

$$Y_d = \int y(\lambda)S_d(\lambda)d\lambda = \sum_{i=1}^{N} \alpha_i Y_i$$

$$Z_d = \int z(\lambda)S_d(\lambda)d\lambda = \sum_{i=1}^{N} \alpha_i Z_i$$

$X_i$, $Y_i$, and $Z_i$ are expressed respectively as follows.

[Expression 6]

$$X_i = \int x(\lambda) S_i(\lambda) d\lambda, \, Y_i = \int y(\lambda) S_i(\lambda) d\lambda, \, Z_i = \int z(\lambda) S_i(\lambda) d\lambda$$

Simplifying the constraint conditions given by the expression 3 using the foregoing expressions 4 and 5 gives a determinant expressed as the following expression 7 representing conditions with respect to $\alpha_1$ to $\alpha_N$.

**[Expression 7]**

$$\begin{pmatrix} X \\ Y \\ Z \end{pmatrix} = \begin{pmatrix} X_1 & X_2 & \cdots & X_N \\ Y_1 & Y_2 & \cdots & Y_N \\ Z_1 & Z_2 & \cdots & Z_N \end{pmatrix} \begin{pmatrix} \alpha_1 \\ \alpha_2 \\ \vdots \\ \alpha_N \end{pmatrix}$$

On the other hand, the amount of approximation indicating how much is the display spectrum $S_d(\lambda)$ of the N-primary-color display approximate to the spectrum $S(\lambda)$ of the subject image is represented using squared errors E expressed as the following expression 8.

**[Expression 8]**

$$E = \int \{S(\lambda) - S_d(\lambda)\}^2 d\lambda$$

$$= \int \left\{ S(\lambda) - \sum_{i=1}^{N} \alpha_i S_i(\lambda) \right\}^2 d\lambda$$

$$= \int \{S(\lambda)\}^2 d\lambda - \int 2S(\lambda) \sum_{i=1}^{N} \alpha_i S_i(\lambda) d\lambda + \int \left\{ \sum_{i=1}^{N} \alpha_i S_i(\lambda) \right\}^2 d\lambda$$

$$= \int S(\lambda) S(\lambda) d\lambda + \sum_{i=1}^{N} \alpha_i \left\{ -2 \int S(\lambda) S_i(\lambda) d\lambda \right\} + \frac{1}{2} \sum_{i=1}^{N} \sum_{j=1}^{N} \alpha_i \left\{ 2 \int S_i(\lambda) S_j(\lambda) d\lambda \right\} \alpha_j$$

$$= s + \mathbf{C}^T \mathbf{a} + \frac{1}{2} \mathbf{a}^T D \mathbf{a}$$

Where, it is assumed as follows.

[Expression 9]

$$\langle ss \rangle = \int S(\lambda) S(\lambda) d\lambda$$

$$\langle ss_i \rangle = \int S(\lambda) S_i(\lambda) d\lambda$$

$$\langle s_i s_j \rangle = \int S_i(\lambda) S_j(\lambda) d\lambda$$

On the assumption, reference symbols s, C, D, and a in the expression 8 are expressed as the following expressions 10, 11, 12, and 13, respectively.

[Expression 10]

$$s = \langle ss \rangle$$

[Expression 11]

$$C = \begin{pmatrix} c_1 \\ c_2 \\ \vdots \\ c_N \end{pmatrix} = \begin{pmatrix} -2\langle ss_1 \rangle \\ -2\langle ss_2 \rangle \\ \vdots \\ -2\langle ss_N \rangle \end{pmatrix}$$

[Expression 12]

$$D = \begin{pmatrix} d_{11} & d_{12} & \cdots & d_{1N} \\ d_{21} & d_{22} & \cdots & d_{2N} \\ \vdots & \vdots & \ddots & \vdots \\ d_{N1} & d_{N2} & \cdots & d_{NN} \end{pmatrix} = \begin{pmatrix} 2\langle s_1 s_1 \rangle & 2\langle s_1 s_2 \rangle & \cdots & 2\langle s_1 s_N \rangle \\ 2\langle s_2 s_1 \rangle & 2\langle s_2 s_2 \rangle & \cdots & 2\langle s_2 s_N \rangle \\ \vdots & \vdots & \ddots & \vdots \\ 2\langle s_N s_1 \rangle & 2\langle s_N s_2 \rangle & \cdots & 2\langle s_N s_N \rangle \end{pmatrix}$$

[Expression 13]

$$a = \begin{pmatrix} \alpha_1 \\ \alpha_2 \\ \vdots \\ \alpha_N \end{pmatrix}$$

As is understood from the expression 9, $\langle s_i s_j \rangle = \langle s_j s_i \rangle$. Thus, in the expression 12, D represents a symmetric matrix.

A superscript "T" denotes transposition of a matrix or vectors.

In the above description, XYZ tristimulus values are used as colorimetric values. When colorimetric values are replaced with N colorimetric values calculated by using arbitrary N functions, the similar description holds.

Further, in the above description, the squared errors E are calculated using the difference, as it is, between the display spectrum $S_d(\lambda)$ of the N-primary-color display and the spectrum $S(\lambda)$ of the subject image. The calculation is not limited to the above case. The respective spectra are weighted using an arbitrary function $W(\lambda)$ and, after that, the squared error therebetween can be obtained. In this case, $S(\lambda)$ and $S_d(\lambda)$ in the expression 8 can be replaced respectively with $S'(\lambda)$ and $S'_d(\lambda)$ given by the following expression 14.

[Expression 14]

$$S'(\lambda) = W(\lambda)S(\lambda)$$

$$S'_d(\lambda) = W(\lambda)S_d(\lambda)$$

It is a goal of the principle to obtain $\alpha_1$ to $\alpha_N$ to minimize the squared error E expressed as the expression 8 under the constraint conditions given by the expression 3, namely, from among $\alpha_1$ to $\alpha_N$ which satisfy the expression 7.

As is obvious from the expression 8, the squared error E is given by a quadratic equation with respect to a. As is clear from the expression 7, the constraint conditions are given by a linear equation with respect to a. In other words, this is a quadratic programming problem in which an objective function is expressed as a quadratic equation and constraint conditions are expressed as a linear equation.

Two means for solving the problem, namely, means using Lagrange's method of undetermined coefficients and means using the reduced gradient method will now be described hereinbelow.

According to the former means using the Lagrange's method of undetermined coefficients, a solution is obtained without considering a possible range of a display signal value of the primary color i, namely, the condition given by the expression 2. When the obtained solution lies within the range of the condition given by the expression 2, it is the final solution.

According to the latter means using the reduced gradient method, so long as the solution obtained using Lagrange's method of undetermined coefficients is not within the above range, the optimum solution is successively obtained.

1. Solution Using Lagrange's Method of Undetermined Coefficients

According to Lagrange's method of undetermined coefficients, F is defined as expressed as the following expression 15. $\alpha_1$ to $\alpha_N$, $\lambda_X$, $\lambda_Y$, and $\lambda_Z$, which satisfy that the gradient of F represents zero, are obtained, then $\alpha_1$ to $\alpha_N$ to minimize the squared error E given by the expression 8 are calculated under the constraint conditions given by the expression 3.

[Expression 15]

$$F = E + \lambda_X g_X + \lambda_Y g_Y + \lambda_Z g_Z$$

Where, $g_X$, $g_Y$, and $g_Z$ are defined by the following expression 16.

[Expression 16]

$$g_X = X_1\alpha_1 + X_2\alpha_2 + \cdots + X_N\alpha_N - X$$

$$g_Y = Y_1\alpha_1 + Y_2\alpha_2 + \cdots + Y_N\alpha_N - Y$$

$$g_Z = Z_1\alpha_1 + Z_2\alpha_2 + \cdots + Z_N\alpha_N - Z$$

N conditional expressions, which are obtained by partially differentiating F, expressed as the above expression 15, with respect to $\alpha_1$ to $\alpha_N$ respectively to be equal to zero, is given by the following expression 17.

**[Expression 17]**

$$\frac{\partial F}{\partial \mathbf{a}} = \begin{pmatrix} \dfrac{\partial F}{\partial \alpha_1} \\ \dfrac{\partial F}{\partial \alpha_2} \\ \vdots \\ \dfrac{\partial F}{\partial \alpha_N} \end{pmatrix} = \begin{pmatrix} c_1 + d_{11}\alpha_1 + \cdots + d_{1N}\alpha_N + X_1\lambda_X + Y_1\lambda_Y + Z_1\lambda_Z \\ c_2 + d_{21}\alpha_1 + \cdots + d_{2N}\alpha_N + X_2\lambda_X + Y_2\lambda_Y + Z_2\lambda_Z \\ \vdots \\ c_N + d_{N1}\alpha_1 + \cdots + d_{NN}\alpha_N + X_N\lambda_X + Y_N\lambda_Y + Z_N\lambda_Z \end{pmatrix} = \begin{pmatrix} 0 \\ 0 \\ \vdots \\ 0 \end{pmatrix}$$

Three conditional expressions, which are obtained by partially differentiating F, expressed as the foregoing expression 15, such that $\lambda_X$, $\lambda_Y$, and $\lambda_Z$ are to be equal to zero respectively, are the same as the foregoing expression 7.
Using the (N + 3) conditional expressions obtained as mentioned above, $\alpha_1$ to $\alpha_N$, $\lambda_X$, $\lambda_Y$, and $\lambda_Z$ are obtained. $\alpha_1$ to $\alpha_N$, $\lambda_X$, $\lambda_Y$, and $\lambda_Z$ are expressed as the following expression 18.

**[Expression 18]**

$$\begin{pmatrix} \alpha_1 \\ \alpha_2 \\ \vdots \\ \alpha_N \\ \lambda_X \\ \lambda_Y \\ \lambda_Z \end{pmatrix} = \begin{pmatrix} d_{11} & d_{12} & \cdots & d_{1N} & X_1 & Y_1 & Z_1 \\ d_{21} & d_{22} & \cdots & d_{2N} & X_2 & Y_2 & Z_2 \\ \vdots & \vdots & \ddots & \vdots & \vdots & \vdots & \vdots \\ d_{N1} & d_{N2} & \cdots & d_{NN} & X_N & Y_N & Z_N \\ X_1 & X_2 & \cdots & X_N & 0 & 0 & 0 \\ Y_1 & Y_2 & \cdots & Y_N & 0 & 0 & 0 \\ Z_1 & Z_2 & \cdots & Z_N & 0 & 0 & 0 \end{pmatrix}^{-1} \begin{pmatrix} -c_1 \\ -c_2 \\ \vdots \\ -c_N \\ X \\ Y \\ Z \end{pmatrix}$$

Whether each of $\alpha_1$ to $\alpha_N$, given by the expression 18, satisfies the condition with respect to the dynamic range of the display signal value of the primary color i expressed as the expression 2 is determined. If each $\alpha_i$ satisfies the condition, the obtained $\alpha_1$ to $\alpha_N$ represent the optimum solution. When the number of $\alpha_i$ which does not satisfy the condition is one or more, the reduced gradient method, which will be described hereinbelow, is used.

2. Solution Using Reduced Gradient Method

Summary of Reduced Gradient Method

The reduced gradient method is one of successive approximations. According to the successive approximations, in a convex function E(a) in which an element a (namely, $a \in R^N$) of an N-dimensional Euclidean space $R^N$ is variable, in order to obtain the minimum value, approximation is made from a certain point $a_1$ in a gradient downwardly in this order of $a_2$, $a_3$, ... to be converged to the minimum point a*.
To utilize the reduced gradient method, the following two conditions are needed.

(1) The objective function E(a) expressed as the expression 8 represents a convex function.
(2) The feasible region (solution space) of a specified by the expressions 2 and 7 represents a convex set.

For the condition (1), all of elements in Hessian matrix D given by the expression 12 are positive. This guarantees that a point in which the gradient indicates zero is only the local minimum point and this point indicates the optimum solution.

For the condition (2), it is easily understood that all of points in a line segment, connecting two arbitrary points in the feasible region, are included in the feasible region. Thus, it is proved that the feasible region represents a convex set.

Therefore, the reduced gradient method can be applied to the problem of obtaining the minimum value of E (a) expressed as the expression 8 under the limitations of the expressions 2 and 3.

Transition between points in the reduced gradient method is performed as follows.

A certain point $a_1$ in the feasible region is set to a starting point. First, a point aimed at advances from the point $a_1$ in the direction toward $-\nabla E(a_1)$. This direction is opposite to the direction of the normal line to the level surface of $E(a_1)$ passing through the point $a_1$. In a manner, the direction indicates the direction of the steepest falling gradient.

The point advances from $a_1$ in this direction and then stops at a position where the gradient gradually changes from the falling gradient to a rising gradient or at the end of the boundary of the feasible region. The stop position is set to a point $a_2$.

The travelling direction is changed at this point $a_2$. The travelling direction must be determined such that the angle which the travelling direction forms with $-\nabla E(a_1)$ is 90° or smaller and, when the point aimed at advances in the direction, the point aimed at travels in the feasible region.

After that, in a manner similar to the above, the point aimed at stops at a position where the gradient changes from the falling gradient to the rising gradient or at the boundary of the feasible region, the travelling direction is changed, and the point aimed at successively advances in this order of $a_3$, $a_4$, ... Even if the travelling direction is changed within an angle of 90° or smaller, so long as there is no more point in the feasible region in the changed travelling direction, the last point is the optimum point.

A process according to the reduced gradient method will now be specifically described. As a preparation to use the method, gradient is first calculated.

In the expression 7, the matrix on the right side is replaced by A and vectors on the left side are replaced by b. Since vectors on the right side are already defined as a in the expression 13, the expression 7 is expressed as b = Aa.

Since the expression 7 describes the three constraint conditions with respect to $\alpha_1$ to $\alpha_N$, N variables include (N - 3) independent variables. The remaining three variables are dependent variables.

On the basis of a base B of b = Aa, a is divided into a basic variable (called as a dependent variable) $a^B$ and a nonbasic variable (independent variable) $a^R$. Similarly, the matrix A is divided as A = [B | R]. In the following description, to simplify the description, $a_1$, $a_2$, and $a_3$ are ; set to basic variables and $a_4$, $a_5$, ..., and $a_N$ are set to nonbasic variables. Those variables and matrices and the vector b are expressed as the following expression 19.

**[Expression 19]**

$$\mathbf{a}^B = \begin{pmatrix} \alpha_1 \\ \alpha_2 \\ \alpha_3 \end{pmatrix} \quad , \quad \mathbf{a}^R = \begin{pmatrix} \alpha_4 \\ \alpha_5 \\ \vdots \\ \alpha_N \end{pmatrix} \quad , \quad \mathbf{b} = \begin{pmatrix} X \\ Y \\ Z \end{pmatrix}$$

$$B = \begin{pmatrix} X_1 & X_2 & X_3 \\ Y_1 & Y_2 & Y_3 \\ Z_1 & Z_2 & Z_3 \end{pmatrix} \quad , \quad R = \begin{pmatrix} X_4 & X_5 & \cdots & X_N \\ Y_4 & Y_5 & \cdots & Y_N \\ Z_4 & Z_5 & \cdots & Z_N \end{pmatrix}$$

On the basis of the above-mentioned basic variables and nonbasic variables, redescribing of the foregoing expression 8 constituting the objective function gives the following expression 20, rewriting of the expression 7 constituting the constraint conditions gives the following expression 21, and redescription of the expression 2 representing the domain of variables gives the following expression 22.

**[Expression 20]**

$$E\left(\mathbf{a}^B, \mathbf{a}^R\right) = s + \mathbf{C}^T \mathbf{a} + \frac{1}{2}\mathbf{a}^T D\mathbf{a} \rightarrow Min$$

[Expression 21]

$$Ba^B + Ra^R = b$$

[Expression 22]

$$0 \leq a^B \leq 1, 0 \leq a^R \leq 1$$

Explicit rewriting of the expression 21 gives the following expression 23.

[Expression 23]

$$\begin{pmatrix} X_1 & X_2 & X_3 \\ Y_1 & Y_2 & Y_3 \\ Z_1 & Z_2 & Z_3 \end{pmatrix} \begin{pmatrix} \alpha_1 \\ \alpha_2 \\ \alpha_3 \end{pmatrix} + \begin{pmatrix} X_4 & X_5 & \cdots & X_N \\ Y_4 & Y_5 & \cdots & Y_N \\ Z_4 & Z_5 & \cdots & Z_N \end{pmatrix} \begin{pmatrix} \alpha_4 \\ \alpha_5 \\ \vdots \\ \alpha_N \end{pmatrix} = \begin{pmatrix} X \\ Y \\ Z \end{pmatrix}$$

Multiplying both the sides of the expression 21, which represents the constraint conditions, by $B^{-1}$ from the left gives the following expression 24.

[Expression 24]

$$a^B + B^{-1}Ra^R = B^{-1}b$$

Concrete rewriting of this expression so as to correspond to the above expression 23 gives the following expression 25.

[Expression 25]

$$\begin{pmatrix} \alpha_1 \\ \alpha_2 \\ \alpha_3 \end{pmatrix} + \begin{pmatrix} X_1 & X_2 & X_3 \\ Y_1 & Y_2 & Y_3 \\ Z_1 & Z_2 & Z_3 \end{pmatrix}^{-1} \begin{pmatrix} X_4 & X_5 & \cdots & X_N \\ Y_4 & Y_5 & \cdots & Y_N \\ Z_4 & Z_5 & \cdots & Z_N \end{pmatrix} \begin{pmatrix} \alpha_4 \\ \alpha_5 \\ \vdots \\ \alpha_N \end{pmatrix} = \begin{pmatrix} X_1 & X_2 & X_3 \\ Y_1 & Y_2 & Y_3 \\ Z_1 & Z_2 & Z_3 \end{pmatrix}^{-1} \begin{pmatrix} X \\ Y \\ Z \end{pmatrix}$$

Expressing of the dependent variables $\alpha_1$ to $\alpha_3$ with respect to the independent variables $\alpha_4$ to $\alpha_N$ yields the following expression 26.

[Expression 26]

$$a^B = -B^{-1}Ra^R + B^{-1}b = k - Ma^R$$

Where, M and k are defined as expressed as the following expression 27.

[Expression 27]

$$M = B^{-1}R = \begin{pmatrix} m_{14} & m_{15} & \cdots & m_{1N} \\ m_{24} & m_{25} & \cdots & m_{2N} \\ m_{34} & m_{35} & \cdots & m_{3N} \end{pmatrix} \quad , \quad \mathbf{k} = B^{-1}\mathbf{b} = \begin{pmatrix} k_1 \\ k_2 \\ k_3 \end{pmatrix}$$

When M and k are defined as expressed as the expression 27, a unit table is expressed as the following table 1.

[Table 1]

| b | $\alpha_1$ | $\alpha_2$ | $\alpha_3$ | $\alpha_4$ | $\alpha_5 \cdots \alpha_N$ |
|---|---|---|---|---|---|
| $k_1$ | 1 | 0 | 0 | $m_{14}$ | $m_{15} \ldots m_{1N}$ |
| $k_2$ | 0 | 1 | 0 | $m_{24}$ | $m_{25} \ldots m_{2N}$ |
| $k_3$ | 0 | 0 | 1 | $m_{34}$ | $m_{35} \ldots m_{3N}$ |

When the expression 26 is substituted into the expression 20 representing the objective function to eliminate $a^B$, namely, $\alpha_1$ to $\alpha_3$, $E(a^B, a^R)$ can be regarded as a function with respect to only $a^R$. Consequently, the function is newly expressed as $F(a^R)$.

As mentioned above, after the independent variables are clarified, the gradient of $F(a^R)$ is calculated as expressed as the following expression 28.

[Expression 28]

$$\nabla F\left(\mathbf{a}^R\right) = \frac{\partial E}{\partial \mathbf{a}^R} + \frac{\partial \mathbf{a}^B}{\partial \mathbf{a}^R} \cdot \frac{\partial E}{\partial \mathbf{a}^B}$$

$\partial a^B / \partial a^R$ in the second term on the right side of the expression 28 are calculated as expressed as the following expression 29 using the expressions 26 and 27.

[Expression 29]

$$\frac{\partial \mathbf{a}^B}{\partial \mathbf{a}^R} = -\begin{pmatrix} \dfrac{\partial \alpha_1}{\partial \alpha_4} & \dfrac{\partial \alpha_2}{\partial \alpha_4} & \dfrac{\partial \alpha_3}{\partial \alpha_4} \\ \dfrac{\partial \alpha_1}{\partial \alpha_5} & \dfrac{\partial \alpha_2}{\partial \alpha_5} & \dfrac{\partial \alpha_3}{\partial \alpha_5} \\ \vdots & \vdots & \vdots \\ \dfrac{\partial \alpha_1}{\partial \alpha_N} & \dfrac{\partial \alpha_2}{\partial \alpha_N} & \dfrac{\partial \alpha_3}{\partial \alpha_N} \end{pmatrix} = -\begin{pmatrix} m_{14} & m_{24} & m_{34} \\ m_{15} & m_{25} & m_{35} \\ \vdots & \vdots & \vdots \\ m_{1N} & m_{2N} & m_{3N} \end{pmatrix} = -M^T$$

Therefore, $\nabla F(a^R)$ given by the expression 28 is finally expressed as the following expression 30.

[Expression 30]

$$\nabla F\left(\mathbf{a}^R\right)=\begin{pmatrix}\dfrac{\partial F}{\partial \alpha_4}\\[4pt]\dfrac{\partial F}{\partial \alpha_5}\\[2pt]\vdots\\[4pt]\dfrac{\partial F}{\partial \alpha_N}\end{pmatrix}=\begin{pmatrix}\dfrac{\partial E}{\partial \alpha_4}\\[4pt]\dfrac{\partial E}{\partial \alpha_5}\\[2pt]\vdots\\[4pt]\dfrac{\partial E}{\partial \alpha_N}\end{pmatrix}-\begin{pmatrix}m_{14}&m_{24}&m_{34}\\m_{15}&m_{25}&m_{35}\\\vdots&\vdots&\vdots\\m_{1N}&m_{2N}&m_{3N}\end{pmatrix}\begin{pmatrix}\dfrac{\partial E}{\partial \alpha_1}\\[4pt]\dfrac{\partial E}{\partial \alpha_2}\\[4pt]\dfrac{\partial E}{\partial \alpha_3}\end{pmatrix}$$

$$=\begin{pmatrix}c_4+\left(d_{41}\alpha_1+d_{42}\alpha_2+\cdots+d_{4N}\alpha_N\right)\\c_5+\left(d_{51}\alpha_1+d_{52}\alpha_2+\cdots+d_{5N}\alpha_N\right)\\\vdots\\c_N+\left(d_{N1}\alpha_1+d_{N2}\alpha_2+\cdots+d_{NN}\alpha_N\right)\end{pmatrix}-\begin{pmatrix}m_{14}\dfrac{\partial E}{\partial \alpha_1}+m_{24}\dfrac{\partial E}{\partial \alpha_2}+m_{34}\dfrac{\partial E}{\partial \alpha_3}\\m_{15}\dfrac{\partial E}{\partial \alpha_1}+m_{25}\dfrac{\partial E}{\partial \alpha_2}+m_{35}\dfrac{\partial E}{\partial \alpha_3}\\\vdots\\m_{1N}\dfrac{\partial E}{\partial \alpha_1}+m_{2N}\dfrac{\partial E}{\partial \alpha_2}+m_{3N}\dfrac{\partial E}{\partial \alpha_3}\end{pmatrix}$$

$$=\begin{pmatrix}\left\{c_4-\left(m_{14}c_1+m_{24}c_2+m_{34}c_3\right)\right\}+\sum_{i=1}^{N}\left\{d_{4i}-\left(m_{14}d_{1i}+m_{24}d_{2i}+m_{34}d_{3i}\right)\right\}\alpha_i\\[6pt]\left\{c_5-\left(m_{15}c_1+m_{25}c_2+m_{35}c_3\right)\right\}+\sum_{i=1}^{N}\left\{d_{5i}-\left(m_{15}d_{1i}+m_{25}d_{2i}+m_{35}d_{3i}\right)\right\}\alpha_i\\[2pt]\vdots\\[6pt]\left\{c_N-\left(m_{1N}c_1+m_{2N}c_2+m_{3N}c_3\right)\right\}+\sum_{i=1}^{N}\left\{d_{Ni}-\left(m_{1N}d_{1i}+m_{2N}d_{2i}+m_{3N}d_{3i}\right)\right\}\alpha_i\end{pmatrix}$$

After the preparation of the above-mentioned gradient calculation, the reduced gradient method is performed according to the following process.

<Step 1>

First, one point included in the feasible region, namely, a solution which satisfies both of the expression 21 indicating the constraint conditions and the expression 22 indicating the domains of variables is found using any means. The means for finding the solution include, for example, means disclosed in "Color Conversion Method for Multiprimary Display Using Matrix Switching", T. Ajito et al., OPTICAL REVIEW, Vol. 8, No. 3, 2001, pp. 191-197 (document 5). The obtained solution is set to $\bar{a}$ expressed as the following expression 31.

[Expression 31]

$$\bar{\mathbf{a}}=\left(\bar{\mathbf{a}}^B,\bar{\mathbf{a}}^R\right)=\left(\bar{\alpha}_1,\bar{\alpha}_2,\cdots,\bar{\alpha}_N\right)$$

<Step 2>

Subsequently, the direction in which a point aimed at moves from $\bar{a}^R$ as a starting point is determined. A direction vector in the travelling direction is given by the following expression 32.

[Expression 32]

$$\Delta a^R = (\Delta\alpha_4, \Delta\alpha_5, ..., \Delta\alpha_N)$$

Where, the direction vector $\Delta a^R$ points in the direction which forms an angle of 90° or smaller with respect to the direction opposite to the gradient in $\bar{a}^R$ and in which the point aimed at is not out of the feasible region when the point advances in the direction. Accordingly, when $4 \leq i \leq N$, the direction vector can be set so as to satisfy the following expression 33.

[Expression 33]

$$\Delta\alpha_i = \begin{cases} -\dfrac{\partial F}{\partial\alpha_i} & :\text{when } 0 \leq \bar{\alpha}_i \leq 1 \text{ or} \left(\bar{\alpha}_i = 0 \text{ and } -\dfrac{\partial F}{\partial\alpha_i} > 0\right) \\ & \text{or} \left(\bar{\alpha}_i = 1 \text{ and } -\dfrac{\partial F}{\partial\alpha_i} < 0\right) \\ 0 & :\text{other cases} \end{cases}$$

Where, on the right side of the expression 33; F is partially differentiated with respect to $\alpha_i$ and, after that, $\bar{a}$ is substituted for a value.

In other words, only when $\bar{\alpha}_i$ is in the dynamic range or when $\bar{\alpha}_i$ is at the limit of the dynamic range but the gradient points in the direction in which the gradient is in the dynamic range, $\bar{\alpha}_i$ is changed. In other cases, $\bar{\alpha}_i$ is not changed. With respect to $\Delta a^R = (\Delta\alpha_4, \Delta\alpha_5, ..., \Delta\alpha_N)$ obtained as mentioned above, the following cases are possible.

(i) When $\Delta a^R = 0$: Since the present point expressed as the above expression 31 indicates the minimum point, the process is terminated. The reason is that the objective function E is not decreasing in any directions in which each independent variable is varied in whichever directions.

(ii) When $\Delta a^R \neq 0$: the process proceeds to <step 3> which will be described hereinbelow.

<Step 3>

The point aimed at is advanced from the present point expressed as the expression 31 to the limit of forward movement in the travelling direction obtained by the above step 2 within the feasible region. Alternatively, a point at which the gradient changes from the falling gradient to the rising gradient is found.

Therefore, $\bar{a}^R$ is replaced with the following expression 34.

[Expression 34]

$$\bar{\mathbf{a}}^R + \theta\Delta\mathbf{a}^R = \left(\bar{\alpha}_4 + \theta\Delta\alpha_4, \bar{\alpha}_5 + \theta\Delta\alpha_5, \cdots, \bar{\alpha}_N + \theta\Delta\alpha_N\right) \qquad (\text{where, } \theta \geq 0)$$

$\theta_1$, $\theta_2$, and $\theta_3$ are calculated as expressed as the following expression 35. Where, $\theta_1$ represents an upper limit which does not exceed the limit of the feasible region with respect to the independent variables $\bar{\alpha}_4$ to $\bar{\alpha}_N$, $\theta_2$ represents an upper limit which does not exceed the limit of the feasible region with respect to the dependent variables $\bar{\alpha}_1$ to $\bar{\alpha}_3$, and $\theta_3$ represents a value which gives a point at which the gradient changes from the falling gradient to the

rising gradient.

**[Expression 35]**

$$\begin{cases}
\theta_1 = \max\left\{\theta \mid 0 \le \overline{\alpha}_4 + \theta\Delta\alpha_4 \le 1 \text{ and } 0 \le \overline{\alpha}_5 + \theta\Delta\alpha_5 \le 1 \right. \\
\qquad\qquad\qquad\qquad\qquad \left. \text{and } \cdots \text{and } 0 \le \overline{\alpha}_N + \theta\Delta\alpha_N \le 1 \right\} \\[2mm]
\theta_2 = \max\left\{\theta \mid 0 \le \overline{\mathbf{a}}^B \le 1\right\} \\
\qquad = \max\left\{\theta \mid 0 \le \mathbf{k} - M\left(\overline{\mathbf{a}}^R + \theta\Delta\mathbf{a}^R\right) \le 1\right\} \\
\qquad = \max\left\{\theta \;\middle|\; \begin{pmatrix} 0 \\ 0 \\ 0 \end{pmatrix} \le \begin{pmatrix} k_1 \\ k_2 \\ k_3 \end{pmatrix} - \begin{pmatrix} m_{14} & m_{15} & \cdots & m_{1N} \\ m_{24} & m_{25} & \cdots & m_{2N} \\ m_{34} & m_{35} & \cdots & m_{3N} \end{pmatrix} \begin{pmatrix} \overline{\alpha}_4 + \theta\Delta\alpha_4 \\ \overline{\alpha}_5 + \theta\Delta\alpha_5 \\ \vdots \\ \overline{\alpha}_N + \theta\Delta\alpha_N \end{pmatrix} \le \begin{pmatrix} 1 \\ 1 \\ 1 \end{pmatrix} \right\} \\
\qquad = \max\left\{\theta \;\middle|\; \begin{pmatrix} 0 \\ 0 \\ 0 \end{pmatrix} \le \begin{pmatrix} k_1 - \sum_{i=4}^{N} m_{1i}\overline{\alpha}_i - \theta\sum_{i=4}^{N} m_{1i}\Delta\alpha_i \\ k_2 - \sum_{i=4}^{N} m_{2i}\overline{\alpha}_i - \theta\sum_{i=4}^{N} m_{2i}\Delta\alpha_i \\ k_3 - \sum_{i=4}^{N} m_{3i}\overline{\alpha}_i - \theta\sum_{i=4}^{N} m_{3i}\Delta\alpha_i \end{pmatrix} \le \begin{pmatrix} 1 \\ 1 \\ 1 \end{pmatrix} \right\} \\
\theta_3 = \left\{\theta \text{ to minimize } F\left(\overline{\mathbf{a}}^R + \theta\Delta\mathbf{a}^R\right) = E\left(\overline{\mathbf{a}}^R - \theta M\Delta\mathbf{a}^R, \overline{\mathbf{a}}^R + \theta\Delta\mathbf{a}^R\right)\right\}
\end{cases}$$

As expressed as the following expression 36, the minimum value among $\theta_1$, $\theta_2$, and $\theta_3$ is set to an increase limit $\overline{\theta}$.

[Expression 36]

$$\overline{\theta} = \min\{\theta_1, \theta_2, \theta_3\}$$

Depending on the value of the $\overline{\theta}$ obtained as mentioned above, the process is changed as follows.

(i) When $\overline{\theta} = \infty$: The objective function is not bounded below. In other words, this means that there is no solution. In the present principle, however, the objective function is expressed by the quadratic equation and is convex downward. Thus, such a case does not occur.

(ii) When $\overline{\theta} < \infty$: The values of $\overline{a}^R$ and $\overline{a}^B$ are replaced by $\overline{a}^R + \overline{\theta}\,\Delta a^R$ and $\overline{a}^R - \overline{\theta}\,M\Delta a^R$, respectively.

(ii-a) When $\overline{\theta} = \theta_1$ or $\theta_3$: The present base B and the unit table remain as they are. The process is returned to the above step 2.

(ii-b) When $\overline{\theta} = \theta_2$: Since $\alpha_\omega{}^B$ as one of the present basic variables $a^B$ equals 0 or 1 so long as $\theta = \overline{\theta}$, the base is

changed such that $\alpha_\omega{}^B$ is set to nonbasic and the maximum nonbasic variable $\alpha_\xi{}^B$ among $|\bar{\alpha}_i|$ is included in the base in place of $\alpha_\omega{}^B$, and a new unit table is formed. Then, the process is returned to the foregoing step 2.

As mentioned above, the step 2 or 3 is repeated plural times according to circumstances. When $\Delta a^R = 0$ as mentioned above in the step 2, the target minimum point is obtained.

An embodiment of the present invention will now be described hereinbelow with reference to the drawings.

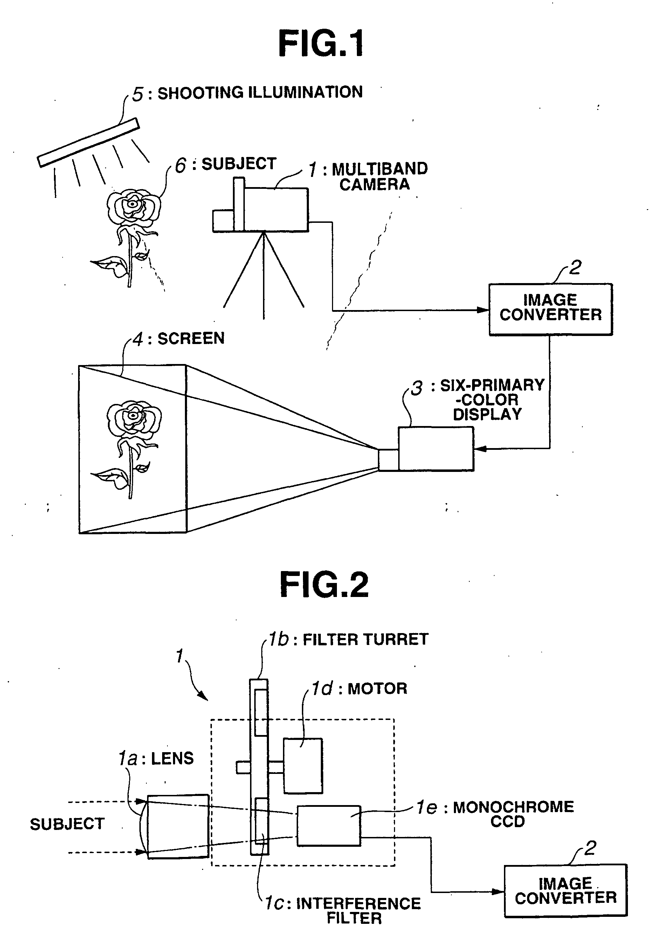

Figs. 1 to 7 illustrate the embodiment of the present invention. Fig. 1 is a diagram showing the schematic structure of a color reproduction system.

The color reproduction system comprises: a multiband camera 1 for shooting a subject 6 irradiated with a shooting illumination light 5; an image converter 2 for converting a color image supplied from the multiband camera 1 into a color image to be output to a six-primary-color display 3, which will be described later; and the six-primary-color display 3 functioning as color image display means for projecting the color image converted through the image converter 2 on, for example, a screen 4.

The multiband camera 1 captures multiband image data, for example, 16-band image data of the subject 6 irradiated with the shooting illumination light 5 and then outputs the captured image data to the image converter 2.

The image converter 2 converts the 16-band image data supplied from the multiband camera 1 into six-primary-color image data to be displayed by the six-primary-color display 3 and then outputs the resultant image data to the six-primary-color display 3. The conversion will be described in detail later.

The six-primary-color display 3 projects the six-primary-color image data supplied from the image converter 2 onto, for example, the screen 4 to observably display the image.

Fig. 2 is a diagram showing the structure of the multiband camera 1.

Incident light from the subject 6 is converged by a lens 1a and only light segments having predetermined wavebands are allowed to pass through interference filters 1c, thus the image is formed on a monochrome CCD 1e.

The number of interference filters 1c is 16 so as to correspond to 16 bands. The 16 interference filters 1c are arranged in a filter turret 1b. The filter turret 1b is rotated by a motor 1d, so that the interference filters 1c are sequentially disposed in a light path between the lens la and the monochrome CCD 1e. Synchronously with the positioning of each interference filter 1c in the light path, shooting is performed with the monochrome CCD 1e, thus sequentially capturing subject images of 16 bands constituting a spectral sensitivity and corresponding to the respective interference filters 1c.

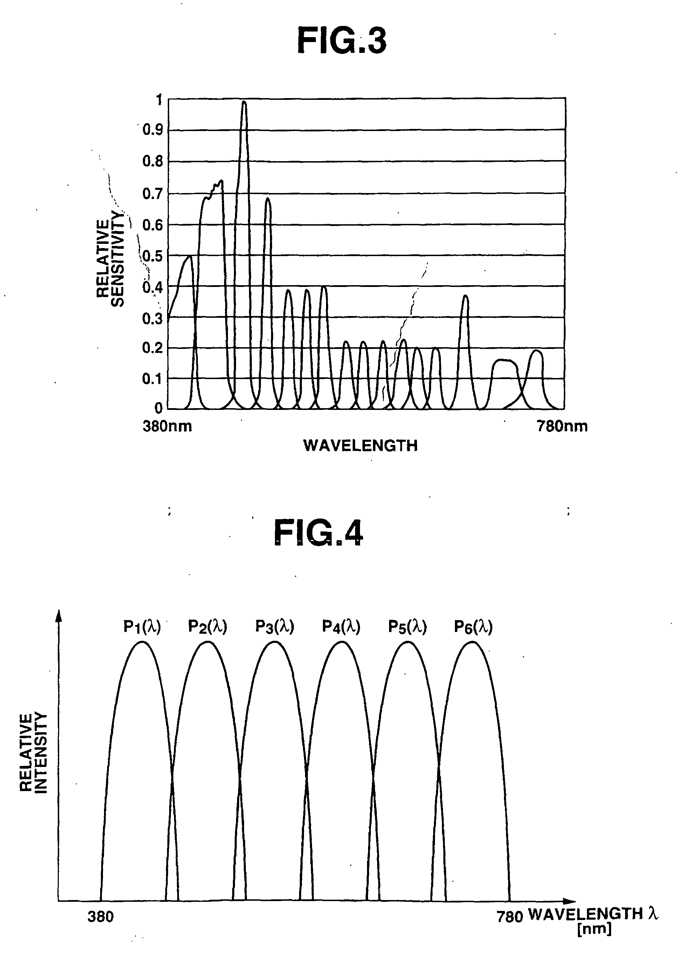

Fig. 3 is a diagram showing an example of the spectral sensitivity of the multiband camera 1 having 16 bands.

Referring to Fig. 3, the multiband camera 1 has a spectral sensitivity having 16 peaks generated at substantially regular intervals in wavelengths of 380 to 780 nm. Multiband image data comprising 16 bands captured by the multiband camera 1 is output to the image converter 2 and is then processed.

When the interference filters 1c of the filter turret 1b are changed, the 16-band spectral sensitivity can be changed according to the application.

Fig. 4 is a diagram of an emission spectrum comprising six primary colors of the six-primary-color display 3.

Six-primary-color emission spectral components $p_1(\lambda)$, $p_2(\lambda)$, $p_3(\lambda)$, $p_4(\lambda)$, $p_5(\lambda)$, and $p_6(\lambda)$ are distributed at substantially regular intervals in the wavelengths of 380 to 780 nm.

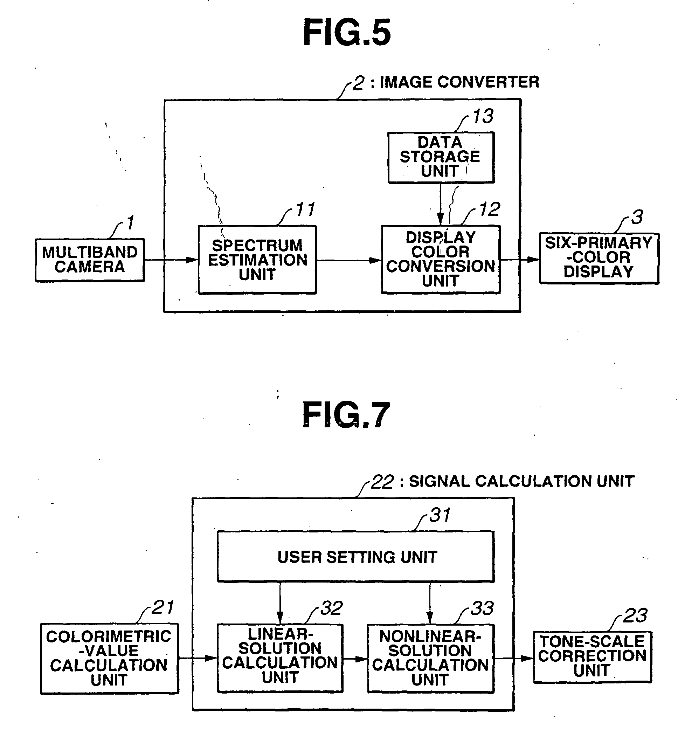

Fig. 5 is a block diagram showing the structure of the image converter 2.

The image converter 2 comprises a spectrum estimation unit 11, a display color conversion unit 12, and a data storage unit 13.

The spectrum estimation unit 11 receives multiband image data having 16 bands from the multiband camera 1, calculates a subject spectrum constituting spectral data, and then outputs the data to the display color conversion unit 12 constituting color conversion means. For the subject spectrum calculated by the spectrum estimation unit 11, as disclosed in, for example, the foregoing document 1, spectral reflectance, obtained by spectral reflectance calculation means, is multiplied by an illumination spectrum, thus obtaining the subject spectrum.

The display color conversion unit 12 converts the subject spectrum supplied from the spectrum estimation unit 11 into six-primary-color display signals using color reproduction data of the six-primary-color display 3, the color reproduction data being supplied from the data storage unit 13, and then outputs the signals to the six-primary-color display 3.

The color reproduction data of the six-primary-color display 3 stored in the data storage unit 13 comprises an emission spectrum of the respective primary colors and tone-scale characteristics. The emission spectrum comprises 401 data arranged at intervals of 1 nm in the wavelengths of 380 to 780 nm. The tone-scale characteristics are data obtained by applying display brightness, which is normalized such that the maximum value equals to 1, to an input signal value of each primary color for every predetermined sampling tone scale.

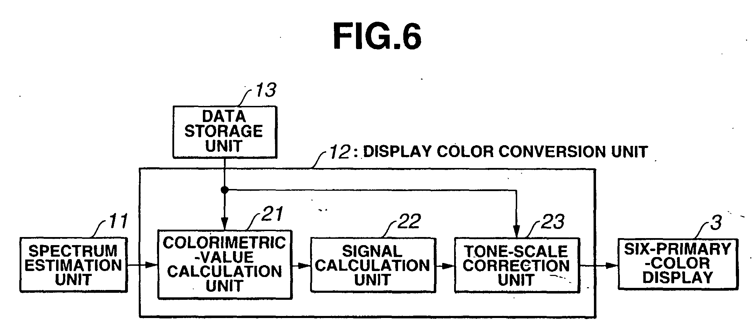

Fig. 6 is a block diagram showing the structure of the display color conversion unit 12.

The display color conversion unit 12 comprises a colorimetric-value calculation unit 21, a signal calculation unit 22, and a tone-scale correction unit 23.

The colorimetric-value calculation unit 21 calculates a spectrum of the six-primary-color display 3 supplied from the data storage unit 13 using the foregoing expression 6 and also calculates colorimetric values of the subject spectrum supplied from the spectrum estimation unit 11 using the foregoing expression 4.

A color matching function used for calculation of the colorimetric values is selected from among color matching function data, stored in the colorimetric-value calculation unit 21, by the user of the image converter 2. As mentioned above, the arbitrary number of functions can be used.

In this manner, the colorimetric-value calculation unit 21 outputs, to the signal calculation unit 22, the spectrum including the primary colors of the six-primary-color display 3 and the colorimetric values thereof, and the subject spectrum and the colorimetric values thereof.

The signal calculation unit 22 receives the spectrum including the primary colors of the six-primary-color display 3 and the colorimetric values thereof, and the subject spectrum and the colorimetric values thereof, calculates display signal values of the six-primary-color display 3, and then outputs the values to the tone-scale correction unit 23.

In this instance, by setting, for example, the signal calculation unit 22 can weight the subject spectrum and the spectrum including the primary colors of the six-primary-color display 3 on the basis of the expression 14.

The tone-scale correction unit 23 corrects the six-primary-color display signals supplied from the signal calculation unit 22 using the tone-scale characteristics supplied from the data storage unit 13 and then outputs the resultant signals to the six-primary-color display 3.

Fig. 7 is a block diagram showing the structure of the signal calculation unit 22.

The signal calculation unit 22 comprises a user setting unit 31, a linear-solution calculation unit 32, and a nonlinear-solution calculation unit 33.

The user setting unit 31 outputs setting information, indicating whether the linear-solution calculation unit 32 is used, to the linear-solution calculation unit 32 and also generates another setting information, indicating whether the nonlinear-solution calculation unit 33 is used, to the nonlinear-solution calculation unit 33.

When the user setting unit 31 outputs the setting information indicating the use of the linear-solution calculation unit 32, the linear-solution calculation unit 32 calculates six-primary-color display signals for the subject spectrum supplied from the spectrum estimation unit 11 and then outputs the signals together with the subject spectrum to the nonlinear-solution calculation unit 33.

On the other hand, if the user setting unit 31 outputs the setting information indicating that the linear-solution calculation unit 32 is not used, the linear-solution calculation unit 32 outputs the subject spectrum supplied from the spectrum estimation unit 11 as is to the nonlinear-solution calculation unit 33.

When the user setting unit 31 outputs the other setting information indicating the use of the nonlinear-solution calculation unit 33, the nonlinear-solution calculation unit 33 receives the subject spectrum or six-primary-color display signals from the linear-solution calculation unit 32.

When receiving the subject spectrum or the six-primary-color display signals which are not within the range of 0 to 1, the nonlinear-solution calculation unit 33 calculates six-primary-color display signals to be within the range of 0 to 1 and then outputs the obtained signals to the tone-scale correction unit 23.

When receiving the six-primary-color display signals which are within the range of 0 to 1, the nonlinear-solution calculation unit 33 outputs the received six-primary-color display signals to the tone-scale correction unit 23.

On the other hand, when the user setting unit 31 outputs the setting information indicating that the nonlinear-solution calculation unit 33 is not used, the nonlinear-solution calculation unit 33 outputs the received six-primary-color display signals as they are to the tone-scale correction unit 23. However, when the six-primary-color display signals are not within the range of 0 to 1, the nonlinear-solution calculation unit 33 maps the signal values so as to be within the range of 0 to 1.

A process of calculating display signals in each of the linear-solution calculation unit 32 and the nonlinear-solution calculation unit 33 will now be described in more detail.

The linear-solution calculation unit 32 calculates display signals on the six-primary-color display 3 using linear quadratic programming. Specifically, the unit 32 utilizes Lagrange's method of undetermined coefficients described in the foregoing principle. In other words, the linear-solution calculation unit 32 calculates display signals $\alpha_1$ to $\alpha_6$ of the six-primary-color display 3 on the basis of the expression 18 using the primary-color spectrum for the six-primary-color display 3 and the colorimetric values thereof supplied from the colorimetric-value calculation unit 21, the colorimetric values of the subject supplied from the colorimetric-value calculation unit 21, and the subject spectrum supplied from the spectrum estimation unit 11.

The nonlinear-solution calculation unit 33 calculates display signals of the six-primary-color display 3 using nonlinear quadratic programming. Specifically, the unit 33 utilizes the reduced gradient method described in the foregoing principle. In other words, the nonlinear-solution calculation unit 33 receives the subject spectrum, the colorimetric values thereof, the spectrum of the six-primary-color display 3, and the colorimetric values thereof from the linear-solution calculation unit 32 and performs the processing according to the above-mentioned steps of <step 1> to <step 3> to calculate the display signals $\alpha_1$ to $\alpha_6$ of the six-primary-color display 3.

The above-mentioned present embodiment intends to display an image with an approximated spectrum. Accordingly, even when statistical information regarding variations in the color matching functions is unknown, faithful color reproduction can be performed for many observers.

Since spectral approximation is performed under the constraint conditions to match the colorimetric values, faithful color reproduction for many observer can be performed with higher accuracy.

Since the subject spectrum and the display spectrum are properly weighted and the display spectrum is approximated to the subject spectrum, faithful color reproduction for many observers can be performed with higher accuracy.

In addition, since arbitrary color matching functions can be used as color matching functions for calculating the colorimetric values', a color matching function appropriate for the observer and high-dimensional colorimetric values indicating variations in the color matching functions can be used. Thus, faithful color reproduction for many observers can be performed with higher accuracy.

As a calculation method for spectral approximation, least-squares approximation is used. Consequently, fast calculation can be performed and faithful color reproduction for many observers can be realized for the same processing time as that of the existing system.

Even when a solution obtained by least-squares approximation is not within the region feasible for display, successive calculation is performed to obtain the optimum solution in the region feasible for display.

In addition, in the successive calculation, it is unnecessary to repeat the operation until the optimum solution is obtained. The operation is appropriately terminated to obtain a relatively accurate approximate solution, thus resulting in a reduction in calculation time.

As mentioned above, even when there is no statistical data regarding individual differences in color matching functions, faithful color reproduction can be performed for many more observers.

The present invention is not limited to the foregoing embodiment but many modifications and variations are possible within the spirit and scope of the present invention.

Industrial Applicability

As mentioned above, according to the color reproduction system of the present invention, faithful color reproduction can be performed for many observers with variations in color matching functions.

**Claims**

1. A color reproduction system comprising:

   color conversion means for converting spectral data into display signals; and
   color image display means for performing display on the basis of the display signals, wherein
   the color conversion means converts spectral data into display signals such that a display spectrum relating to display by the color image display means is approximated to the spectral data within the gamut of the display spectrum realizable by the color image display means.

2. The system according to Claim 1, wherein the color conversion means performs the approximation under condition that colorimetric values of the spectral data match colorimetric values of the display spectrum, and then converts the spectral data into the display signals.

3. The system according to Claim 2, wherein the colorimetric values are obtained using the arbitrary number of functions so as to have a one-to-one correspondence to each function.

4. The system according to Claim 1, 2, or 3, wherein the color conversion means approximates the spectral data weighted by a desired function to the display spectrum weighted by the desired function.

5. The system according to Claim 1, 2, 3, or 4, wherein the color conversion means performs the approximation using least-squares approximation between the spectral data and the display spectrum.

6. The system according to Claim 1, 2, 3, 4, or 5, wherein the color conversion means performs the approximation using least-squares approximation whereby a display spectrum based on the display signals lies within the gamut of the display realizable by the color image display means.

# FIG.1

5 : SHOOTING ILLUMINATION

6 : SUBJECT

1 : MULTIBAND CAMERA

2

IMAGE CONVERTER

4 : SCREEN

3 : SIX-PRIMARY -COLOR DISPLAY

# FIG.2

1b : FILTER TURRET

1

1d : MOTOR

1a : LENS

1e : MONOCHROME CCD

SUBJECT

1c : INTERFERENCE FILTER

2

IMAGE CONVERTER

18

# FIG.3

# FIG.4

# FIG.5

2 : IMAGE CONVERTER

MULTIBAND CAMERA /1

SPECTRUM ESTIMATION UNIT /11

DATA STORAGE UNIT /13

DISPLAY COLOR CONVERSION UNIT /12

SIX-PRIMARY -COLOR DISPLAY /3

# FIG.7

22 : SIGNAL CALCULATION UNIT

USER SETTING UNIT /31

COLORIMETRIC -VALUE CALCULATION UNIT /21

LINEAR- SOLUTION CALCULATION UNIT /32

NONLINEAR- SOLUTION CALCULATION UNIT /33

TONE-SCALE CORRECTION UNIT /23

# FIG.6

EP 1 450 302 A1

**EP 1 450 302 A1**

## INTERNATIONAL SEARCH REPORT

International application No.

PCT/JP02/11030

### A. CLASSIFICATION OF SUBJECT MATTER

Int.Cl$^7$ G06T1/00, H04N1/46, H04N1/60, H04N9/64, G09G5/02, G09G5/04

According to International Patent Classification (IPC) or to both national classification and IPC

### B. FIELDS SEARCHED

Minimum documentation searched (classification system followed by classification symbols)

Int.Cl$^7$ G06T1/00, H04N1/46, H04N1/60, H04N9/64, G09G5/02, G09G5/04

Documentation searched other than minimum documentation to the extent that such documents are included in the fields searched

Electronic data base consulted during the international search (name of data base and, where practicable, search terms used)

JICST FILE(JOIS)

### C. DOCUMENTS CONSIDERED TO BE RELEVANT

| Category* | Citation of document, with indication, where appropriate, of the relevant passages | Relevant to claim No. |
|---|---|---|
| A | JP 2000-253263 A (Olympus Optical Co., Ltd.), 14 September, 2000 (14.09.00), Full text; all drawings (Family: none) | 1-6 |
| A | JP 2000-152269 A (Olympus Optical Co., Ltd.), 30 May, 2000 (30.05.00), Full text; all drawings (Family: none) | 1-6 |
| A | JP 9-172649 A (Olympus Optical Co., Ltd.), 30 June, 1997 (30.06.97), Full text; all drawings & US 5864364 A | 1-6 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 January, 2003 (07.01.03) | 12 February, 2003 (12.02.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

22

**INTERNATIONAL SEARCH REPORT**

| International application No. |
| --- |
| PCT/JP02/11030 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2001-86354 A (Fuji Photo Film Co., Ltd.), 30 March, 2001 (30.03.01), Full text; all drawings (Family: none) | 1-6 |
| A | JP 2872759 B2 (Fuji Photo Film Co., Ltd.), 24 March, 1999 (24.03.99), Full text; all drawings & US 5063439 A | 1-6 |
| A | JP 7-86815 B2 (Fuji Photo Film Co., Ltd.), 20 September, 1995 (20.09.95), Full text; all drawings (Family: none) | 1-6 |
| A | Multispectrum niyoru Ko Rinjokan Saigen System (Natural Vision), Masahiro YAMAGUCHI, The Institute of Image Electronics Engineers of Japan Dai 181 Kai Kenkyukai Koen Yoko 00-04-08, pages 45 to 50, 16 November, 2000 (16.11.00), (in Japan) | 1-6 |
| T | 6 Genshoku Display o Mochiita Toshoku Jikken Taishi TERAJI, Takao OSAWA, Masahiro YAMAGUCHI, Nagaaki OYAMA, Color Forum Japan 2001 Proceedings 6-7, pages 97 to 100, 14 November, 2001 (14.11.01), (in Japan) | 1-6 |

Form PCT/ISA/210 (continuation of second sheet) (July 1998)